## Europäisches Patentamt
## European Patent Office
## Office européen des brevets

(19)

(11) Numéro de publication: **0 028 553**
**B1**

(12)

# FASCICULE DE BREVET EUROPEEN

(45) Date de publication du fascicule du brevet: **31.08.83**

(51) Int. Cl.³: **H 02 B 9/00**

(21) Numéro de dépôt: **80401462.9**

(22) Date de dépôt: **13.10.80**

(54) Coffret électrique de répartition basse tension à socle de réhaussement.

(30) Priorité: **06.11.79 FR 7927523**

(43) Date de publication de la demande:
**13.05.81 Bulletin 81/19**

(45) Mention de la délivrance du brevet:
**31.08.83 Bulletin 83/35**

(84) Etats contractants désignés:
**BE CH DE GB IT LI NL SE**

(56) Documents cités:
**DE - A - 2 406 263**
**FR - A - 1 443 292**
**FR - A - 2 308 277**

(73) Titulaire: **MERLIN GERIN**
**Rue Henri Tarze**
**F-38050 Grenoble Cedex (FR)**

(72) Inventeur: **Charbonneau, Michel**
**Merlin Gerin Rue Henri Tarze**
**F-38050 Grenoble Cedex (FR)**
Inventeur: **Giraud, Jean-Michel**
**Merlin Gering Alpes Av. Paul-Louis Merlin**
**F-73800 Montmelian (FR)**

(74) Mandataire: **Kern, Paul et al,**
**Merlin Gerin Sce. Brevets 20, rue Henri Tarze**
**F-38050 Grenoble Cedex (FR)**

Courier Press, Leamington Spa, England.

EP 0 028 553 B1

Coffret electrique de repartition basse tension a socle de rehaussement

L'invention est relative à un coffret de distribution électrique basse tension, tel que défini dans le préambule de la revendication 1.

On connaît déjà, par exemple par le document FR—A—1.443.292, un tableau de support d'appareils électriques de distribution ayant un panneau de fixation des appareils, articulé sur un cadre fixé au mur. Les pièces de fixation du panneau sur le cadre sont des pièces indépendantes introduites dans des orifices du cadre et conformées pour constituer des charnières. Ce montage présente obligatoirement du jeu et est fragile. Le pivotement du panneau est limité à 90° et l'emploi de pièces additionnelles complique l'assemblage et le coût de l'ensemble.

Un autre coffret connu (DE—A—2.406.263) comporte un socle de rehaussement, qui accroît l'espace disponible au câblage, mais le socle et la fixation du coffret sur le socle sont rigides ce qui ne facilite pas le câblage du coffret.

Le but de l'invention est de faciliter le montage et la câblage électrique du coffret, grâce à un socle de rehaussement perfectionné améliorant l'accessibilité des bornes de branchement de l'appareillage.

L'invention telle qu'elle est caractérisée dans les revendications résout ce problème en reportant l'articulation au niveau de l'assemblage des longerons et des traverses du socle. Les longerons et les traverses sont des profilés, avantageusement en matière plastique, dont les extrémités en équerre sont reliées par des charnières autorisant le pivotement des longerons.

Pendant le câblage le châssis de support de l'appareillage électrique modulaire est fixé à un seul longeron et peut être pivoté avec ce dernier en position écartée du mur. Après le câblage le châssis est appliqué sur le socle et fixé de plus à l'autre longeron et/ou aux traverses pour constituer un ensemble rigide avec le socle fixé au mur.

Selon une autre caractéristique de l'invention, l'organe d'emboîtement de chaque traverse comprend un pivot fixe à ailettes radiales élastiques, engagé dans le logement de section carrée de chaque longeron pour s'opposer au déboîtement du socle de rehaussement.

D'autres avantages et caractéristiques ressortiront plus clairement de l'exposé qui va suivre de deux modes de réalisation de l'invention, donnés à titre d'exemples non limitatifs et représentés aux dessins annexés, dans lesquels:

la figure 1 est une vue en élévation du socle de rehaussement selon l'invention, représenté en position assemblée;

la figure 2 est une vue en coupe selon la ligne II—II de la fig. 1, montrant un coffret de distribution à appareillage modulaire fixé au socle de rehaussement;

les figures 3 et 4 illustrent des vues en plan de la fig. 1, le châssis du coffret étant montré respectivement en position montée sur le socle et en position pivotée de câblage;

la figure 5 est une vue en élévation et de dos d'une traverse du socle de rehaussement;

la figure 6 est une vue en coupe, à échelle agrandie, suivant la ligne VI—VI de la fig. 1, et montre la section d'un longeron du socle de rehaussement;

la figure 7 illustre une variante de réalisation de l'invention.

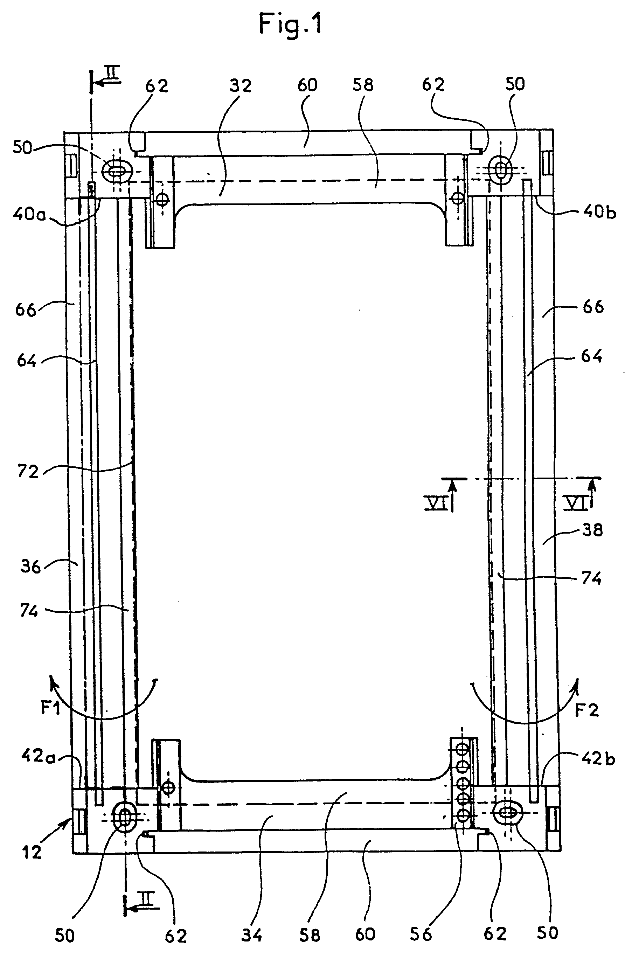

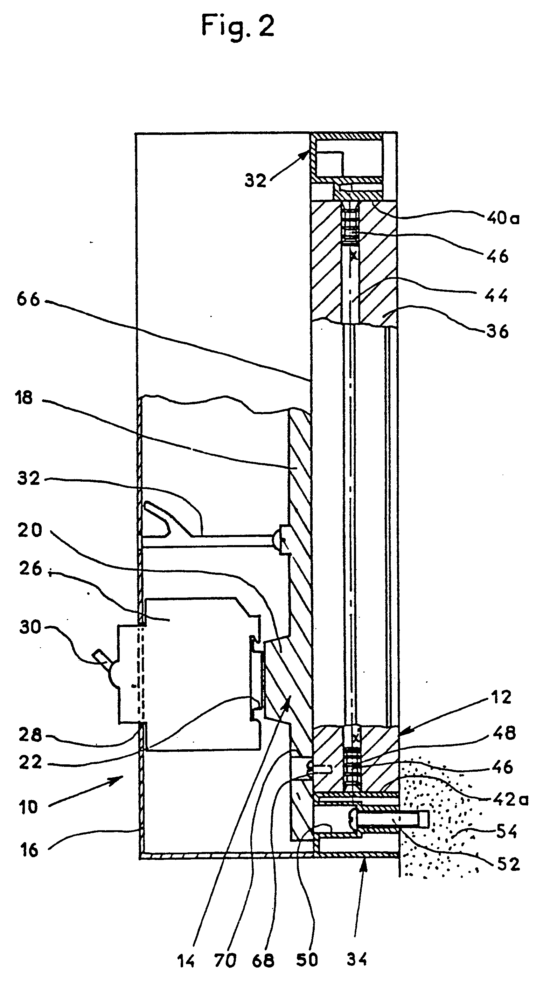

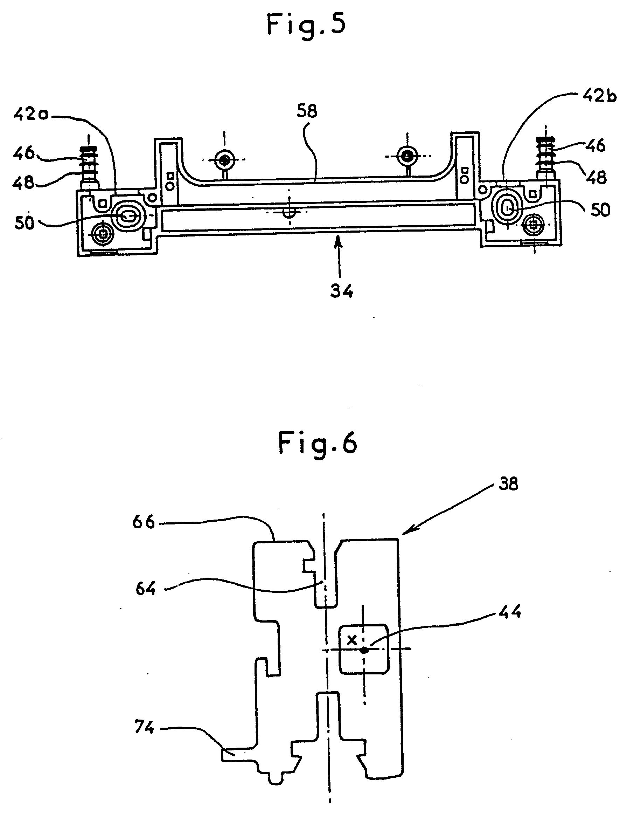

Sur les figures 1 à 6, un coffret de répartition 10 est formé par l'assemblage de trois éléments parallélépipédiques, notamment un élément mural postérieur ou socle de rehaussement 12, un élément intermédiaire ou châssis 14 de support de l'appareillage électrique modulaire encliquetable, et un élément antérieur ou capot 16. Le châssis 14 comporte un cadre 18 en matériau isolant sur les montants duquel sont fixés par des pattes de maintien 20 des rails 22 de support, notamment à profil DIN symétrique, et des borniers 24 de raccordement. L'appareillage modulaire 26, notamment des disjoncteurs, des coupe-circuit, des interrupteurs, des prises de courant et des auxiliaires de commande, est fixé par encliquetage sur les rails 22 en faisant saillie par des lumières 28 de la face frontale du capot 16. Le capot 16 est maintenu en position montée au moyen d'organes d'accrochage 32 faisant l'objet du brevet français No 2.308.27    de la demanderesse.

Le socle rectangulaire de rehaussement 12 en matériau isolant est réalisé selon l'invention par l'emboîtement d'une traverse supérieure 32 et d'une traverse inférieure 34 de structure identique sur deux longerons verticaux 36, 38 opposés parallèles deux à deux. Chaque traverse 32, 34 comporte une paire de faces d'appui 40a, 40b; 42a, 42b, coopérant avec les extrémités du longeron 36, 38 correspondant, doté d'un logement 44 extrudé de section carrée ou rectangulaire s'étendant verticalement selon la direction de l'axe XX' sur toute la hauteur du longeron. Chaque face d'appui 40a, 40b, 42a, 42b des traverses 32, 34 porte un pivot ou tourillon 46 à ailettes 48 radiales, susceptible de s'emboîter dans le logement 44 du longeron 36, 38. Les pivots 46 des faces d'appui supérieure 40a et inférieure 42a, sont alignés selon l'axe XX' et orientés l'un vers l'autre dans le logement 44 du longeron 36, de manière à définir une charnière autorisant le pivotement du longeron 36 autour de l'axe XX' grâce à un léger jeu (non représenté) ménagé entre chaque extrémité du longeron et la face d'appui 40a, 42a conjuguée. D'une manière similaire les pivots 46 alignés des faces 40b, 42b forment des gonds pour l'autre longeron 38 pivotant. Les ailettes 48 radiales s'opposent à un éventuel déboîtement des traverses 32, 34 sans gêner le libre pivotement des longerons 36, 38.

Les traverses 32, 34 comportant des trous 50 de passage de vis 52 de fixation du socle de rehaussement 12 contre un mur 54 ou autre support fixe. Une ou plusieurs barrettes de raccordement 56 peuvent être positionnées sur le rebord 58 arrière à surface plane parallèle au mur et intercalée entre les faces d'appui 40a, 40b; 42a, 42b de chaque traverse 32, 34 pour effectuer un câblage auxiliaire à partir du socle 12. Une plaque 60 d'obturation, perpendiculaire au rebord 58, est montée à coulissement dans des rainures de guidage 62, de chaque traverse 32, 34 et peut être enlevée pour libérer un passage des câbles (non représentés) d'amenée de courant accessible de l'avant.

Chaque longeron 36, 38 présente une structure identique et est pourvu d'une rainure 64 verticale s'étendant dans la direction de l'axe XX' le long de la paroi antérieure 66 de support du châssis 14. Ce dernier est fixé sur le socle de rehaussement 12 au moyen de vis 68 traversant des trous 70 des montants du cadre 18 pour s'introduire dans la rainure 64 de chaque longeron 36, 38. Le socle de rehaussement 12 peut comporter un fond 72 rectangulaire en matériau isolant positionné derrière une patte 74 en saillie des longerons 36, 38.

Le montage et le câblage du coffret de répartition 10 s'effectuent de la manière suivante:

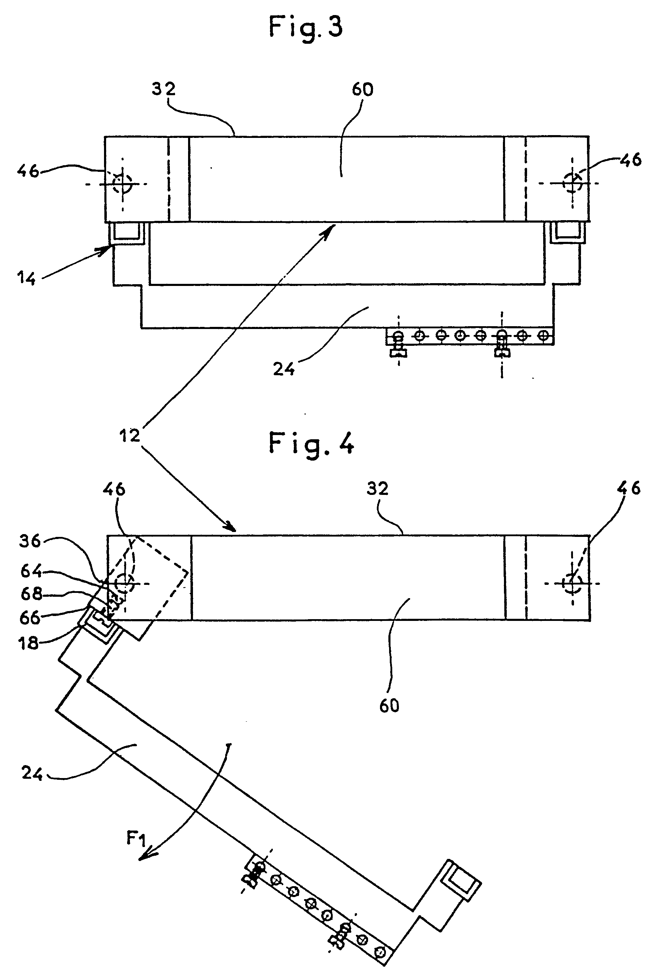

Après emboîtement des pivots 46 des traverses 32, 34 dans les logements 44 des longerons 36, 38, le socle de rehaussement 12 est fixé au mur 54 ou support par les vis 52. Les câbles d'entrée du réseau d'alimentation sont introduits à l'intérieur du socle 12 après retrait de la plaque d'obturation 60 de l'une 32 des traverses. Le châssis 14 équipé de l'appareillage électrique encliqueté sur les rails 22 est ensuite solidarisé à l'un 36 des longerons au moyen de deux vis 68 fixées dans la rainure 64. L'absence de vis 68 de fixation dans la rainure 64 de l'autre longeron 38 permet un pivotement du châssis 14 autour des pivots 46 alignés des faces d'appui 40a, 42a par rotation du longeron 36 dans le sens de la flèche F$_1$ (fig. 4). Le câblage de l'appareillage en position de pivotement du longeron 36 et du châssis 14 s'effectue aisément à partir de la face antérieure du coffret.

Il est également possible de faire pivoter le châssis 14 autour des pivots 46 des faces d'appui 40b, 42b. Les deux vis 68 de fixation sont alors vissées dans la rainure 64 du longeron 38 qui tourne dans le sens de la flèche F$_2$.

Après l'opération de câblage, le châssis 14 est pivoté en engagement des faces antérieures 66 des longerons 36, 38 et solidarisé au socle de rehaussement 12 par vissage des vis 68 dans les rainures 64 (fig. 3).

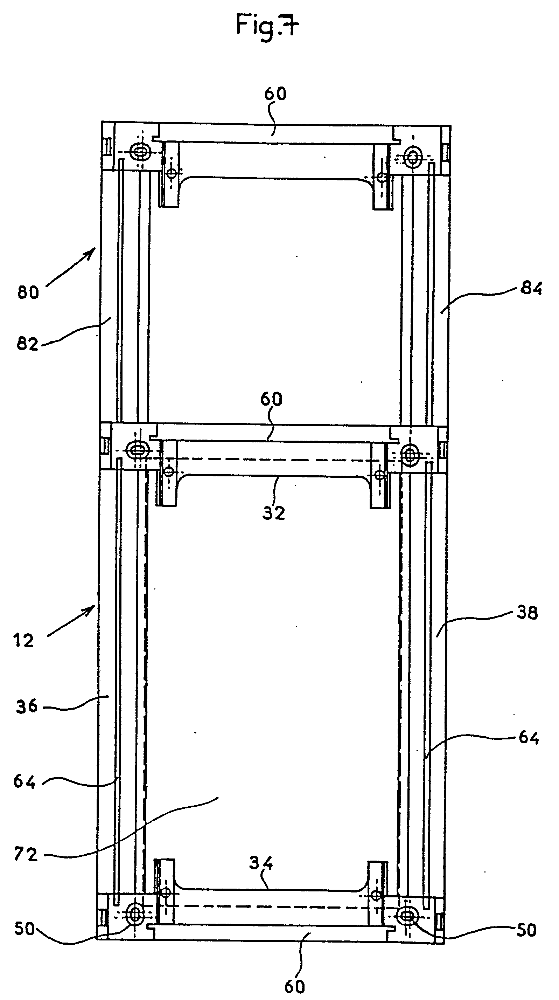

La figure 7 montre une variante de réalisation illustrant un socle de rehaussement 12 selon la fig. 1, associé à une rehausse 80 auxiliaire superposée à montants fixes 82, 84 solidaires de la traverse 32 supérieure. L'ensemble forme un socle de branchement d'un tableau d'abonné permettant le montage du disjoncteur d'abonné sur la rehausse 80 à montants 82, 84 fixes, et du coffret de distribution 10 sur le socle 12 à longerons 36, 38 pivotants.

## Revendications

1. Coffret de distribution électrique basse tension, à structure parallélépipédique, comportant:

— un socle (12) mural de rehaussement constitué d'une paire de traverses (32, 34) et d'une paire de longerons (36, 38) assemblées parallèlement deux à deux pour former un cadre rectangulaire susceptible d'être fixé sur un mur ou un autre organe de support et de présenter une face avant de fixation espacée du mur,

— un châssis (14) intermédiaire de support de l'appareillage électrique modulaire, susceptible d'être fixé à ladite face avant du socle de rehaussement par des moyens de fixation (68), et d'effectuer un mouvement de pivotement par rapport au mur,

— et un capot (16) amovible, associé audit châssis (14), caractérisé par le fait que ledit châssis (14) est fixé rigidement à l'un (36) des longerons (36, 38), dont les extrémités sont assemblées respectivement aux deux traverses (32, 34) du socle (12) par des charnières ayant des gonds (46) alignés avec le longeron (36) et agencés pour permettre un pivotement de l'ensemble longeron (36) — châssis (14) autour de l'axe défini par les gonds (46), perpendiculaire aux traverses (32, 34), le socle (12) étant appliqué au mur.

2. Coffret de distribution selon la revendication 1, caractérisé par le fait que les deux longerons (36, 38) sont assemblés par des charnières (44, 46) aux traverses (32, 34) et que ledit châssis (14) de support de l'appareillage électrique modulaire coopère avec lesdits longerons (36, 38) pivotants, soit pour bloquer les charnières lors de la mise en place des moyens de fixation (68), soit pour autoriser le pivotement d'un longeron (36) après enlèvement des moyens de fixation associés à l'autre longeron (38).

3. Coffret de distribution selon la revendication 2, caractérisé par le fait que lesdits gonds (46) sont constitués par des organes d'emboîtement (46) solidaires des extrémités des traverses pour former des pivots fixes emboîtés dans des logements conjugués (44) ménagés dans les extrémités des longerons (36, 38), lesdits pivots étant conformés pour s'opposer au déboîtement du socle (12) de rehaussement sans gêner le libre pivotement desdits longerons (36, 38).

4. Coffret de distribution selon la revendication 3, caractérisé par le fait que ledit logement de chaque longeron (36, 38) présente une section carrée ou rectangulaire, et que ledit pivot comporte des ailettes (48) radiales élastiques insérées dans ledit logement (44).

5. Coffret de distribution selon la revendication 1, 2, 3 ou 4, caractérisé par le fait que chaque longeron (36, 38) est pourvu au voisinage de la face avant du socle d'une rainure (64) verticale s'étendant dans la direction de l'axe de pivotement de la charnière associée, et que lesdits moyens de fixation (68) coopèrent avec la rainure lors de la fixation du châssis (14) sur ledit longeron.

6. Coffret de distribution selon l'une quelconque des revendications 1 à 5, caractérisé par le fait qu'une barrette (56) de raccordement est associée à une traverse (32, 34) fixe dudit socle de rehaussement (12) pour effectuer un câblage auxiliaire à partir du socle.

7. Coffret de distribution selon l'une quelconque des revendications 1 à 6, caractérisé par le fait qu'une plaque d'obturation (60) amovible est montée à coulissement dans des rainures de guidage (62) de chaque traverse (32, 34) pour libérer lors de l'enlèvement de la plaque (60) un passage des câbles électriques accessible de l'avant.

8. Coffret de distribution selon l'une quelconque des revendications 1 à 7, caractérisé par le fait que ledit socle de rehaussement (12) est fixé au mur par des vis (52) traversant des trous (50) ménagés dans lesdites traverses (32, 34) fixes.

9. Coffret de distribution selon l'une quelconque des revendications 1 à 8, caractérisé par le fait que ledit socle de rehaussement (12) à longerons (36, 38) pivotants est réalisé en matériau plastique, et est associé à une rehausse (80) auxiliaire à montants (82, 84) fixes pour former un socle de branchement d'un tableau d'abonné.

10. Coffret de distribution selon l'une quelconque des revendications 1 à 9, caractérisé par le fait que ledit socle (12) présente deux plans de symétrie et qu'un capot (16) amovible est associé audit châssis (14).

**Patentansprüche**

1. Niederspannungsverteilerkasten von parallelipedischer Form bestehend aus:
— einem Wanderhöhungssockel (12) bestehend aus einem Paar Querleisten (32, 34) und einem Paar Längsleisten (36, 38), die zwei zu zwei parallel zur Bildung eines rechteckigen Rahmens verbunden sind, der an einer Wand oder einem anderen Tragelement befestigt werden kann und eine von der Wand entfernte Vorderbefestigungsfläche aufweist,
— einer Zwischenträgerplatte (14) der modularen elektrischen Apparate, die an der genannten Vorderwand des Erhöhungssockels durch Befestigungsmittel (68) festmachbar und gegenüber der Wand schwenkbar ist,
— und einer der genannten Trägerplatte (14) zugeordneten Haube (16), dadurch gekennzeichnet, dass die genannte Trägerplatte (14) starr an einer (36) der Längsleisten (36, 38) befestigt ist, wovon die Endteile je an den beiden Querleisten (32, 34) des Sockels (12) durch mit der Längsleiste (36) ausgerichteten Scharnierstifte (46) gelagert sind, die so ausgebildet sind, dass die Einheit Längsleiste (36),
— Trägerplatte (14) um die Achse der Scharnierstifte (46) senkrecht zu den Querleisten (32, 34) schwenkbar ist, wenn der Sockel (12) an der Wand hängt.

2. Verteilerkasten nach Anspruch 1, dadurch gekennzeichnet, dass die beiden Längsleisten (36, 38) durch Scharniere (44, 46) an den Querleisten (32, 34) befestigt sind, und dass die genannte Trägerplatte (14) der modularen elektrischen Apparate mit den genannten schwenkbaren Längsleisten (36, 38) entweder zur Blockierung der Scharniere bei Befestigung der Befestigungsmittel (68) oder zur Schwenkung der Längsleiste (36) nach Wegnehmen der der anderen Längsleiste (38) zugeordneten Befestigungsmittel zusammenarbeiten.

3. Verteilerkasten nach Anspruch 2, dadurch gekennzeichnet, dass die genannten Scharnierstifte (46) aus an den Enden der Querleisten angebrachten Einsteckorganen (46) bestehen, welche feststehende Zapfen bilden, die in übereinstimmende an den Enden der Längsleisten vorgesehenen Lagern eingreifen, welche Zapfen so ausgebildet sind, dass sie das Abnehmen des Erhöhungssockels (12) verhindern, ohne das freie Schwenken der Längsleisten (36, 38) zu verhindern.

4. Verteilerkasten nach Anspruch 3, dadurch gekennzeichnet, dass das genannte Lager in jeder Längsleiste (36, 38) einen viereckigen oder rechteckigen Querschnitt hat, und dass der genannte Zapfen mit radialen elastischen in das Lager (44) eindringenden Flügeln (48) versehen ist.

5. Verteilerkasten nach Anspruch 1, 2, 3 oder 4, dadurch gekennzeichnet, dass eine sich senkrecht in der Richtung der Schwenkachse des übereinstimmenden Scharnieres erstreckende Rille (64) in der Nähe der Vorderwand des Sockels in jeder Längsleiste (36, 38) angebracht ist, und dass die genannten Befestigungsmittel (68) mit der Rille, bei der Befestigung der Trägerplatte (14) auf der genannten Längsleiste, zusammenarbeiten.

6. Verteilerkasten nach einem der vorigen Ansprüche 1 bis 5, dadurch gekennzeichnet, das eine Anschlussleiste (56) an der festen Querleiste (32, 34) des Erhöhungssockels (12) zur Bildung einer Hilfsverdrahtung vom Sockel aus angeordnet ist.

7. Verteilerkasten nach einem der vorigen Ansprüche 1 bis 6, dadurch gekennzeichnet, dass eine abnehmbare Abschliessplatte (60) in Führungsrillen jeder Querleiste (32, 34) gleitbar gelagert ist, um beim Abnehmen der Platte (60) einen von vorn zugänglichen Durchgang der elektrischen Kabel zu befreien.

8. Verteilerkasten nach einem der Ansprüche 1 bis 7, dadurch gekennzeichnet, dass der genannte Erhöhungssockel (12) durch Schrauben (52), die in den festen Querleisten (32, 34) angebrachte Löcher durchqueren, an der Wand befestigt ist.

9. Verteilerkasten nach einem der Ansprüche 1 bis 8, dadurch gekennzeichnet, dass der genannte Erhöhungssockel (12) mit schwenkbaren Längsleisten (36, 38) aus Plastik besteht und mit einem Hilfserhöhungsrahmen (80) mit festem Ständer (82, 84) zur Bildung eines Zählerverteilungssockels vereinigt ist.

10. Verteilerkasten nach einem der Ansprüche 1 bis 9, dadurch gekennzeichnet, dass der genannte Sockel (12) zwei Symetrieflächen hat und dass eine abnehmbare Haube (16) der genannten Trägerplatte (16) zugeordnet ist.

**Claims**

1. Low-voltage electricity-distribution box having a parallelipiped structure and comprising:
— a raising wall socle (12) constituted by a pair of cross-pieces (32, 34) and a pair of length-pieces (36, 38) parallelly assembled two by two to form a rectangular frame which may be secured to a wall or another support member and has a front face spaced from the wall,
— an intermediary support frame (14) of the modular electrical apparatus which may be secured to said front face of the socle by fastening means (68) and is pivotally movable with respect to the wall,
— and a removable cover (16) associated to said frame (14) characterized by the fact that said frame (14) is rigidly secured to one (36) of said length-pieces (36, 38), the extremities therefrom being respectively mounted on to said two cross-pieces (32, 34) of the socle (12) by hinges with spindles (46) aligned with the length-piece (36) and so devised as to permit a rotation of the whole length-piece (36) — frame (14) on the axis defined by the spindles (46), perpendicular to the cross-pieces (32, 34), the socle (12) being applied against the wall.

2. Distribution box according to claim 1, characterized by the fact that the two length-pieces (36, 38) are mounted on to said two cross-pieces (32, 34) by hinges (44, 46) and that said support frame (14) of the modular electrical apparatus cooperates with said pivotally length-pieces (36, 38) so as to lock the hinges when said fastening means (68) are fixed or to allow the rotation of one length-piece (36) when the fastening means associated to the other length-piece (38) are removed.

3. Distribution box according to claim 2, characterized by the fact that said spindles (46) are constituted by fitting devices (46) secured to the cross-piece extremities so as to form fixed pivots fitted in conjugated sockets (44) provided on the length-piece (36, 38) extremities, said pivots being shaped to prevent the removal of the raising socle without hindering the free rotation of said length pieces (36, 38).

4. Distribution box according to claim 3, characterized by the fact that said socket of each length-piece (36, 38) is rectangular or square shaped and that said pivot comprises radial elastic wings (48) fitted into said socket (44).

5. Distribution box according to claim 1, 2, 3 or 4, characterized by the fact that each length-piece (36, 38) is provided near the socle front face with a vertical groove (64) extending in the rotation axis direction of the associated hinge and that said fastening means (68) cooperate with the groove when the frame (14) is secured to said length-piece.

6. Distribution box according to any one of claims 1 to 5, characterized by the fact that a connecting bar (56) is associated to a fixed cross-piece (32, 34) of said raising socle (12) for an auxiliary wiring from said socle.

7. Distribution box according to any one of claims 1 to 6, characterized by the fact that a removable obturation plate (60) is slidingly mounted in guiding grooves (62) of each cross piece (32, 34) to free an electrical front cable way access when the plate (60) is removed.

8. Distribution box according to any one of claims 1 to 7, characterized by the fact that said raising socle (12) is attached to the wall by means of screws (52) passing through openings (50) provided in said fixed cross-pieces (32, 34).

9. Distribution box according to any one of claims 1 to 8, characterized by the fact that said raising socle (12) with pivotable length-pieces (36, 38) is made in plastic material and is associated to an auxiliary raising frame (80) with fixed pieces (82, 84) to form a raising socle of a distribution board.

10. Distribution box according to any one of claims 1 to 9, characterized by the fact that said cover (12) has two symmetric planes and that a removable cover (16) is associated to said frame (14).

0 028 553

Fig.1

1

# Fig. 2

# Fig. 3

# Fig. 4

## Fig.5

## Fig.6

# Fig.7